# EUROPEAN PATENT SPECIFICATION

(11) **EP 1 749 761 B1**
(45) Date of publication and mention of the grant of the patent: **01.10.2008**
(21) Application number: 06076472.7
(22) Date of filing: 25.07.2006
(51) Int. Cl.: B65D 85/50, B65D 81/26, A47G 7/06

(54) **Fluid retaining device to keep flowers hydrated after cutting, packing and storing inside cardboard boxes for transportation**
Flüssigkeitrückhaltende Einrichtung zur Hydratisierung von Blumen nach Schneiden, Verpackung und Lagern in Kartonschachteln für Transport
Dispositif retenant le fluide pour maintenir les fleurs hydratées après coupage, emballage et stockage en vue de leur transportation

(30) Priority: 03.08.2005 EC 055946
(43) Date of publication of application: 07.02.2007
(73) Proprietor: Di Mella Vespa, Giovanni Carlos, Puerto La Cruz (VE)
(72) Inventor: Di Mella Vespa, Giovanni Carlos, Puerto La Cruz (VE)
(74) Representative: Carvajal y Urquijo, Isabel

(56) References cited:
- EP-A- 0 673 858
- EP-A2- 0 316 771
- WO-A-93/15979
- US-A1- 2005 004 542

## Description

### Field of the Invention

The invention will be used in the flower industry, offering a technical solution to the lack of moisture suffered by flowers during transportation. It will help flowers last longer and improve their appearance while they remain stored in cardboard boxes for transportation to their final destination.

### Background of the Invention

One of the major concerns of the flower industry is how to keep flowers conveniently hydrated after cutting. Flowers are currently placed in liquid-filled plastic containers and stored in cold rooms, in order to prevent deterioration and premature ageing. The problem starts when flowers are placed in cardboard boxes for transportation, because they lose moisture and begin deteriorating. This causes the blossoms to bow, lose strength, and petals begin to fall.

Flowers are shipped both by land and air. During transportation from the farm (where they are cut) to the retailer, flowers are stored without direct moisture. The only way to help them last longer is to keep them in cold rooms or refrigerated trucks; however, because of necessary transportation logistics, flower boxes are kept outside cold rooms for variable periods of time. Exposure to changes in temperature without adequate hydration greatly affects flower quality and growth.

During transportation, boxes temporarily stored at low temperatures are aerated with cold air in an effort to keep temperature low and eliminate excess heat accumulated while kept outside cold areas. Although this process keeps the temperature low, it damages the flowers, as the air circulating inside cold rooms is dry and dehydrates the flowers.

Flower producers urgently need to find a mechanism to guarantee improved hydration to flowers after packing in cardboard boxes and during transportation.

### State of the Art

In an effort to solve these problems plastic containers full of fluid (commonly called Proconas) have been built into cardboard boxes. This solution requires that boxes be transported vertically and handled with extreme care to avoid leakage. This device increases the cost and weight of the boxes, making transportation much more expensive.

Another solution is to introduce each stalk into a tiny test tube containing the necessary fluid to keep the flower hydrated during transportation. This method is both labour and time-intensive, and because stalks have different thickness, it is almost impossible to avoid leakage during transportation.

Another mechanism used by flower growers to try to stop dehydration during transportation is frozen gel bags. However, this method is expensive and time-consuming.

Document WO-A-9315979 discloses a transport vase consisting of a water-tight wrapper shaped as a pouch provided on its inner side with a liquid-storing, absorbent material.

The product subject of this invention is made of an absorbent material that accumulates and retains fluids, preventing leaks inside the boxes. It works as a wrapping that helps protect the stalks in each bunch, keeping the flowers hydrated when placed horizontally, and during the whole transportation process.

Flowers therefore reach their final destination in better shape, with better possibilities of staying fresh longer and looking more attractive in the flower vases of end consumers.

### Description of the Invention

The invention refers to a device made of an absorbent gel-free product that accumulates and retains fluids without leaking, with an outer waterproof layer and an inner permeable or semi-permeable layer joined using a hot melt-type adhesive.

The device is folded to form a protective wrap around the stalks of the flowers in a bunch; it can be either sealed or left open at the edges. The bunch is introduced inside this wrapping and held together using rubber bands. The absorbent material is soaked with fluids to ensure the phenomenon of capillary through the stalks and to maintain blossoms and leaves adequately hydrated. Stalks must be in close contact or very close to the moistened material, so that flowers receiving all necessary hydration from the moment they are packed in the cardboard box and during the entire transportation process to their final destination.

### As to the waterproof material:

The outer waterproof layer of the device can be made of a plastic material such as polyethylene, polypropylene or a combination of these or other similar materials. The idea is to have a waterproof layer that will prevent leaks. This layer can have different colours and printed designs, such as special occasion reminders, brands or any other identification information. Shape and grammage (thickness) per square meter may differ according to the number of stalks that will require hydration.

### As to the permeable or semi-permeable material:

The inner layer of the device is made of permeable or semi-permeable material, such as filter paper or extruded polypropylene, forming a non-woven fabric that has the property of becoming permeable to fluids when surfacted. This material can be either totally or partially permeable to fluids and its main function is to hold the absorbent material in place between the 2 layers. It may have different colours and its size and thickness may be adjusted as needed.

### As to the absorbent material contained between the outer waterproof layer and the inner permeable or semi-permeable layer:

This material consists of wood cellulose, fabric, cotton, or any other kind of synthetic material other than gel, gel-free, that accumulates and retains fluids to nourish and hydrate the flowers. The best material is wood cellulose, because its chemical composition is fully compatible with the stalks, as it comes from tree trunks. Wood cellulose is extracted from wood, as due to its liquid retention and distribution properties, it is widely used to manufacture absorbent products. It is cheaper than other absorbent materials, and it is a largely developed industry world-wide. It comes from a natural renewable resource, trees, and the industry abides by international renovation and reforestation regulations. Wood cellulose has the same physiological components of flower stalks, consisting of micro fibres capable of retaining fluids and distributing nutritious elements.

The use of long or short wood cellulose fibres, either natural or industrially processed, as liquidation retention material has the advantage that it is a similar chemical compound compatible with flower stalks, causing no negative reactions, and on the other hand it releases the liquid needed by the flowers through capillary. The absorption capacity of wood cellulose depends on the type of tree it comes from and on the type of fibre. The invention can use any type of wood cellulose in any of its forms, including laminated, defibred and/or partially defibred.

The system does not use any type of gel, as gel is a material composed of polyacrylamides or polyacrylates with chemical and physical characteristics that enable it to absorb and retain fluids up to 350 times its own dry weight. When not conveniently saturated with fluids, gel starts to absorb all the fluids of the elements around it. Inside flower boxes, instead of keeping them moist and fresh, it absorbs all the fluids from the stalks. In case of over saturation of its nucleus to ensure adequate hydration of the flowers, the gel gains a lot of weight because the over saturation is much higher than what wood cellulose requires, making boxes very heavy, and consequently increasing freight costs.

It is important to mention that the absorbent material may take any shape, rectangular, square, round, trapezoidal, etc. so that it can be conveniently distributed within the absorption area.

### As to adherence of the external layer, the absorbent material and the internal layer.

Hot Melt adhesives are applied to both layers and compressed with a roller. These adhesives are used in high-speed processes because they dry instantly, fixing the absorbent material between both layers. Pressure and heat can be also used on the edges of the absorbent material, melting both layers and sealing them.

### As to the fluid.

The fluid used to impregnate the pad may contain water only, or any water-soluble fluid capable of acting both as nutrient and conditioner to improve flower quality and slow down its growth. It can also have a small part of disinfectants and/or germ-killing products and/or biocides, or any other product that may contribute to make flowers last longer and improve their appearance.

The amount of fluid to be placed in the pad depends on the absorbent material used, and is proportional to the volume of flowers to hydrate using this system and the estimated duration of the transportation to final destination.

### As to the attachment system

To hold the absorbent pad wrapped around the stalks, an attachment device must be used, for example rubber bands, adhesive tapes, strings, or any other material to guarantee that the stalks remain in permanent contact with the absorbent material from the moment the flowers are packed in cardboard boxes and during the transportation to their final destination.

### As to the sealing system

The absorbent pad can be folded to protect the stalks. When the edges of the pad are sealed, a pouch is formed and the stalks are placed inside. The pad can be sealed using ultrasound, mechanical pressure, heat, adhesive materials, etc., forming a pouch with one or several openings sufficiently big to insert the stalks and the liquid desired to hydrate the flowers. You can also leave the lower sides of the pouch open, so that hydration of the container is made by immersion of the lower part. This facilitates the introduction of liquid in the retaining pad.

### As to the shape of the bag

Although different geometrical figures of different sizes, such as triangles, squares, circles, etc., may be required, it is easier to manufacture the bag in a rectangular shape. The shape of the bag will depend on the number and length of the stalks that will be wrapped. Once the absorbent pad has been conveniently moistened and sealed with rubber bands, or any other method, the bag will take the shape of the stalks, making direct and proper contact with them, avoiding leaks and evaporation of the fluids contained in the absorbent pad, increasing the time of hydration, allowing the stalks to be in permanent contact with the moistened pad and holding them securely inside the pouch.

### Advantages of the invention

- Flowers are conveniently hydrated, well-nourished and in good shape while they remain packed in cardboard boxes and during the whole transportation process.
- Flowers last longer.
- Combined with the storage of the boxes in cold rooms, this device helps keep the flowers in good shape, delaying development. They have a fresh, good looking appearance when they reach their final destination.
- Reduce manual labour required to cut the end of the stalks to rehydrate the flowers, a task accomplished by intermediaries, who receive the flowers in their way to final destination, by the same token avoiding the cost of destruction of the cardboard boxes.
- Retailers can minimise waste and make better business.
- Flowers can be exported to marketplaces further away.
- Flowers have longer life, so they can be kept in cold rooms for longer periods. They can be sold near special occasions when the prices of the flowers increase, such as Saint Valentine's Day, Mother's Day, Christmas, etc.

### Beneficiaries of this invention:

- Flower producers who will be able to minimise waste and increase profits by prolonging flower life and healthy appearance.
- Flower retailers who will be able to sell flowers inside the invented wrapping protection device, to help customers prevent dehydration until the flowers are placed in water.
- End consumers, satisfied by the longer lasting life and better appearance of the flowers.
- Intermediate distributors and retailers reduce flower waste and lower manual labour required to cut the edge of the stalks to rehydrate the flowers.

### Invention Testing and Proof of Effectiveness

To prove the effectiveness of the invention, we tested it on different varieties of roses grown by Velvet Flowers, located at km 34 on the road to El Quinche, Province of Pichincha, Ecuador. Two scenarios were used to compare the experiments:
- **Best-case Scenario:** Roses that had been completely and continuously hydrated in direct contact with fluid for the maximum estimated storage and transportation period.
- **Worst-case Scenario:** Roses without hydration, which is the most common method used nowadays to pack and transport the flowers in cardboard boxes.

Roses were hydrated with three different kinds of fluids:
- Water only
- Water containing RVB Crysal
- Water containing professional Crysal

Both additives (Crysal) are products manufactured by firms that also manufacture nutritional solutions, disinfectants, and/or germ-killing products, commonly used by flower producers to improve the conditions of fresh cut flowers and make them last longer.

Stalks were placed inside the invention and were tied up in position using rubber bands both at the upper and lower edges.

Bunches of 25 roses each, were weighted before and after being placed in the fluid containing device, and then stored in cardboard boxes inside a cold room at 2° C.

On the 4^{th}, 8^{th} and 12^{th} day of storage, bunches were weighted again both with and without the device. The results proved that the flowers that had not been hydrated (worst-case scenario) lost 6% to 8% of their original weight after 12 days. Roses that were hydrated and kept inside a glass fluid container (best-case scenario) gained 10% to 12% of their original weight. Flowers that were stored with the invention (fluid retainer) gained 1.5% to 3.5% of their original weight. The difference in weight depends on the fluids used. In consequence, the absorbent pads that retain fluids lost weight, as they gave away fluids both to the flowers and to the environment.

It is important to mention that in the best-case scenario flowers start to grow and mature immediately. With the invented device flowers last much longer, because their weight increases only 15% to 35% (1.5% of 8%) of total weight gain in the best-case scenario. This causes the flowers to last much longer in the vases of final customers. The best-case scenario accelerates the undesired and inconvenient process of growth and maturity of the flowers. Accordingly, the best option is using the invented device because it ensures that flowers live and can be enjoyed for longer periods.

It is also important to mention that, with the use of the invented device, producers, retailers and final consumers will be able to hydrate flowers using any fluid that they consider appropriate to feed them, as well as to prolong the process of growth and maturation.

### Brief Description of Drawings

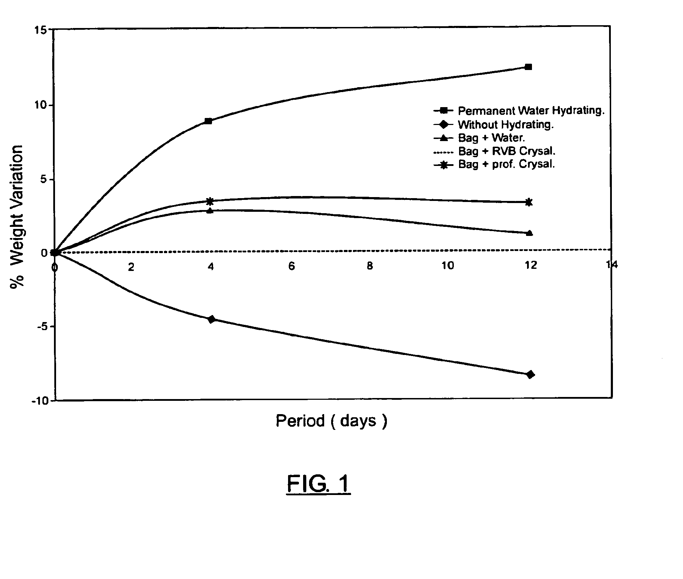

**Figure 1****:** Table with information on the weight that bunches of flowers gained or lost a) when are kept in direct contact with fluids inside a container, b) without fluids, and c) stored inside cardboard boxes using the invention (fluid retainer) hydrated with three different fluids: water only, water containing RVB Crysal and water containing professional Crysal.

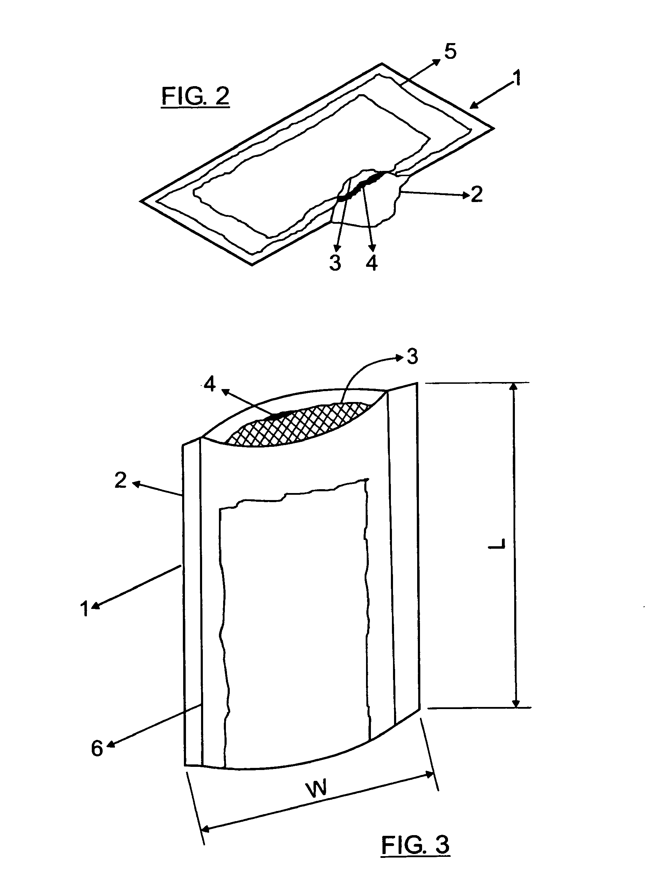

**Figure 2****:** Schematic and perspective view drawings of gel-free device (1), formed by an outer layer (2), an inner layer (3) and the fluid absorbent pad where fluids are stored and retained (4). The joint seal (5) of the outer and inner layers is also shown.
**Figure 3****:** Schematic and perspective view drawings of invented gel-free device (1), formed by an outer layer (2), an inner layer (3) and the fluid absorbent pad where fluids are stored and retained (4), sealed on its edges (6) to form a pouch where stalks and fluids will be placed. W and L lengths shown on drawing may vary according to length of stalks and number of flowers in a bunch.

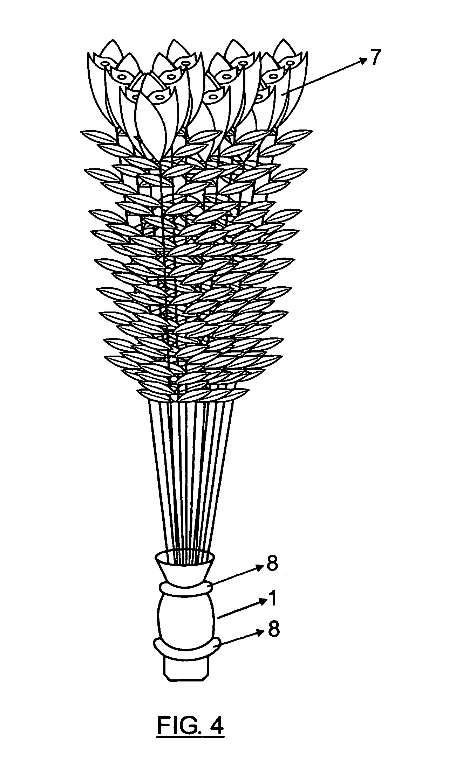

**Figure 4****:** Perspective view example of bunch of flowers (7) with stalks wrapped with invented device (1). Pouch and stalks make direct contact with conveniently hydrated absorbent pad. Rubber bands (8) that tie stalks and device to keep them in position for proper flower hydration are also shown.

### Preferred Mode to Manufacture the Device of the Invention

A machine that manufactures 200 to 400 units per minute has been used to manufacture the absorbent pad.

The steps of the preferred manufacturing process should be:
- An absorbent pad made of defibred wood cellulose, covered with an outer waterproof polyethylene layer of a density of 20 g/m2, and an inner layer made of a permeable non-woven fabric of a density of 15 g/m2. Both layers joined by hot melt adhesive applied at high temperatures (120° C). With this kind of adhesive, the absorbent pad remains in position.
- Using compression rolls, the three materials are sealed together and then folded in the middle to form a protection pouch. Both edges are then sealed using a hot melt adhesive.
- Once folded, the device will have an outer polyethylene layer, an inner layer of permeable non-woven fabric, the lower edge is sealed leaving only an opening on the upper edge, to introduce the stalks and the fluids. This process will help keep moisture in the absorbent pad avoiding leaks. Adhesive tapes can be applied on both edges using silicone
- The end product can come in individual units or in rolls containing 100 to 1500 units. Pre-cut lines are placed between units making it easy to separate them. Rolls are easier to use by flower growers. Easily packed, carried and stored, rolls are more convenient and cheaper.
- As stated in the summary of the invention, the size of the product, its geometrical shape, colour, the way it is folded, its lateral seal, the absorbent material used, are parameters regulated by the manufacturing machine or during the process of selection of raw material.
- Natural wood cellulose of a density of 700 g/m2 was used to manufacture the absorbent pad. It was defibred using a high speed hammer mill which separates cellulose fibres, forming the absorbent zone.

## Claims

1. Wrapping protection device for keeping the hydration of flowers after cutting, wherein said device contains a waterproof outer layer (2); a permeable or semi-permeable inner layer (3) and an absorbent gel-free pad (4) which is placed in any position between the outer and inner layers to store and retain fluids without leaks and wherein said waterproof outer layer (2) and permeable or semi-permeable inner layer (3) are fixed together by compression and hot melt adhesives.

2. Wrapping protection device according to claims 1, wherein said device is folded to form a protective wrap around the stalks of flowers in a bunch, and is either partially or totally sealed or left open at the edges.

3. Wrapping protection device according to claim 2, wherein said pad is soaked with hydrating fluids with the purpose of helping the capillary process on the edges of the stalks and keeping flowers and leaves conveniently hydrated.

4. Wrapping protection device according to the preceding claims, wherein the fluid used to soak the pad contains water only, or any water-soluble fluid, capable of acting both as a conditioner and a nutritional source to improve flower health and delay growth and may also contain small doses of disinfectants and/or germ-killing products and/or biocides, or any other product that may contribute to prolonging flower life in good shape and health.

5. Wrapping protection device according to claims 1 and 2, wherein said device uses an absorbent gel-free material made of wood cellulose (laminated, defibrated or partially defibrated), in its natural state or industrially processed, in long or short fibres, fabric, cotton or any other fabric made of synthetic materials, capable of absorbing fluids.

6. Roll of wrapping protection devices according to any of the preceding claims, wherein the roll comprises pre-cut lines for ease of separation.

## Patentansprüche

1. Wickelschutzvorrichtung zur Beibehaltung der Hydratation von Blumen nach dem Schneiden, wobei die genannte Vorrichtung eine wasserundurchlässige äußere Schicht (2), eine durchlässige oder halbdurchlässige innere Schicht (3) und ein absorbierendes gelfreies Zwischenpolster (4) enthält, welches in jeglicher Position zwischen den äußeren und inneren Schichten platziert ist, um Flüssigkeiten ohne undichte Stellen zu speichern und zurückzuhalten, und wobei die genannte wasserundurchlässige äußere Schicht (2) und die durchlässige oder halbdurchlässige innere Schicht (3) miteinander durch Kompression und Heissschmelzkleber befestigt sind.

2. Wickelschutzvorrichtung nach Anspruch 1, wobei die genannte Vorrichtung gefaltet ist, um eine schützende Umwicklung um die Blütenstiele in einem Strauss herum zu bilden, und an den Rändern entweder teilweise oder vollständig versiegelt oder offen gelassen ist.

3. Wickelschutzvorrichtung nach Anspruch 2, wobei das genannte Zwischenpolster mit hydratisierenden Flüssigkeiten durchtränkt ist, um den Kapillarvorgang an den Rändern der Stiele zu unterstützen und die Blüten und Blätter in geeigneter Weise hydratisiert zu halten.

4. Wickelschutzvorrichtung nach den vorherigen Ansprüchen, wobei die zum Durchtränken des Zwischenpolsters verwendete Flüssigkeit lediglich Wasser enthält, oder jegliche wasserlösliche Flüssigkeit, die sowohl als Konditionierer als auch eine Nährungsquelle wirken kann, um die Gesundheit der Blumen zu verbessern, und das Wachstum zu verzögern, und ebenso niedrig dosierte Desinfektionsmittel und/oder keimtötende Produkte und/oder Pestizide, oder jegliches andere Produkt enthalten kann, das zur Verlängerung der Lebensdauer der Blume in guter Form und Gesundheit beitragen kann.

5. Wickelschutzvorrichtung nach den Ansprüchen 1 und 2, wobei die genannte Vorrichtung ein absorbierendes, gelfreies, aus Holzzellulose hergestelltes Material (beschichtet, zerfasert oder teilweise zerfasert) in seinem natürlichen Zustand oder industriell verarbeitet, in kurzen oder langen Fasern, Gewebe, Baumwolle oder jedes andere aus synthetischen Materialien hergestellte Gewebe, das Flüssigkeiten absorbieren kann, verwendet.

6. Rolle von Wickelschutzvorrichtungen nach irgendeinem der vorherigen Ansprüche, wobei die Rolle vorgestanzte Linien zur Erleichterung der Trennung umfasst.

## Revendications

1. Dispositif de protection d'emballage pour maintenir l'hydratation des fleurs après les avoir coupées dans lequel ledit dispositif contient une couche extérieure étanche à l'eau (2), une couche intérieure perméable ou semi-perméable (3) et un coussinet absorbant sans gel (4) qui est placé dans une position quelconque entre les couches intérieure et extérieure pour stocker et retenir des fluides sans fuites et dans lequel ladite couche extérieure étanche à l'eau (2) et couche intérieure perméable ou semi-perméable (3) sont fixées ensemble par des adhésives par compression et colles thermofusibles.

2. Dispositif de protection d'emballage selon la revendication 1, dans lequel ledit dispositif est plié pour former un emballage protecteur autour des tiges des fleurs dans un bouquet, et il est soit partiellement soit totalement fermé ou laissé ouvert par les bords.

3. Dispositif de protection d'emballage selon la revendication 2, dans lequel ledit coussinet est humecté avec des fluides hydratants afin d'aider le procédé capillaire sur les bords des tiges et maintenir les fleurs et les feuilles convenablement hydratées.

4. Dispositif de protection d'emballage selon les revendications antérieures dans lequel el fluide utilisé pour humecter le coussinet contient uniquement de l'eau, ou n'importe quel fluide soluble dans l'eau, capable d'agir aussi bien comme conditionneur que comme une source nutritionnelle pour améliorer la santé des fleurs et retarder la croissance et il peut également contenir des petites doses de désinfectants et/ou des produits germicides et/ou des biocides, ou tout autre produit pouvant contribuer à prolonger la vie des fleurs en bonne forme et bonne santé.

5. Dispositif de protection d'emballage selon les revendications 1 et 2, dans lequel ledit dispositif utilise un matériel absorbant sans gel fabriqué en cellulose du bois (laminé, défibré ou partiellement défibré), dans son état naturel ou traité industriellement, dans un tissu en coton à fibres longues ou courtes ou tout autre tissu fabriqué de matières synthétiques capables d'absorber des fluides.

6. Rouleau de dispositifs de protection d'emballage selon l'une quelconque des revendications antérieures, dans lequel le rouleau comprend des lignes de prédécoupe pour faciliter la séparation.
